# EUROPEAN PATENT APPLICATION

(11) **EP 3 051 727 A1**
(43) Date of publication of application: **03.08.2016**
(21) Application number: 15305103.2
(22) Date of filing: 29.01.2015
(51) Int. Cl.: H04L 1/00, H04L 1/18

(54) **POINT TO MULTI-POINT WIRELESS TRANSMISSIONS**

(71) Applicant: ALCATEL LUCENT, 92100 Boulogne-Billancourt (FR)
(72) Inventor: WORRALL, Chandrika, Swindon, Wiltshire SN5 7DJ (GB)
(74) Representative: Mills, Julia

(57) **Abstract**

A method of point to multi-point wireless transmission, wherein a a user equipment receiving data transmitted by a network node that is being transmitted to a plurality of user equipment identified by a group identifier that cannot decode it, transmits an indication that at least some of said data has not been successfully decoded on a predetermined resource which can be used by the network node to identify the particular user equipment.

## Description

### FIELD OF THE INVENTION

The invention relates to the field of wireless communications and in particular to point to multipoint transmissions (PTM) within a single cell.

### BACKGROUND

Transmissions from a network node directed to single user equipment, unicast services, are known and they rely on feedback mechanisms and retransmission of data to enable user equipment in areas of high attenuation to successfully receive data. In this regard in unicast transmissions each channel may be configured not for cell edge user equipment but rather for a majority of the UEs within the cell to be able to receive the data and where the data is not successfully received by a user equipment then the network node is notified of this through a feedback HARQ signal and the data can then be retransmitted and the link adapted.

MBMS multimedia broadcast multicast service is designed to provide efficient delivery of broadcast and multicast services to a plurality of user equipment (UE) within a plurality of network cells. Given that the transmission is to many users retransmission of the signal when a few do not successfully receive the signal may be inappropriate and thus rather than using feedback mechanisms, it relies on spectral efficiency effects due to multiple network nodes transmitting the information to allow user equipment located anywhere within the area covered to receive the information.

Single cell point to multipoint PTM transmission is a multicast service where transmissions are to a group of user equipment within a single cell. Such transmissions may be used in a variety of circumstances such as for public safety transmissions. The successful receipt of such transmissions by all user equipment within a group may be problematic as these transmissions do not benefit from the spectral efficiencies of the multiple cell MBMS transmissions. Furthermore determining a suitable channel quality required for transmission to all of the UEs is onerous on processing power for a network node.

### SUMMARY

A first aspect of the present invention provides a method performed at a user equipment comprising: receiving data transmitted by a network node, said data being transmitted to a plurality of user equipment identified by a group identifier; and in response to not being able to decode at least some of said received data, transmitting an indication that said at least some of said data has not been successfully decoded.

The present invention recognises that when transmitting to a group of UEs, it is difficult to set the channel quality levels to a value that would suit all UEs receiving the signal without using undue resources and creating interference, unless account is taken of channel quality indications received from these devices. However, it also recognises that taking account of the channel quality indications received from all the user equipment within a group is cumbersome and would require a large amount of uplink resources and processing power at the network node. It addresses this by providing a feedback mechanism so that where a UE does not successfully receive data, such that there are errors present and it cannot be decoded, then it may transmit an indication to the network node indicating that this is the case. This allows the network node to be aware where a user equipment is not receiving the group communication successfully and which user equipment it is, this information can be used by the network node in both retransmission of the data and in adapting the link in a way that is tailored to user equipment experiencing reception difficulties.

In some embodiments, step of transmitting said indication comprises transmitting said indication on a predetermined resource.

The use of a predetermined resource allocated to that user equipment for the transmission of the indications allows the network node to identify the user equipment from the resource that the indication is transmitted on.

In some embodiments, the method comprises the initial steps of: transmitting an indication to said network node that said user equipment is configured to receive group communications; and receiving an allocation of uplink resources, said uplink resources comprising said predetermined resource for transmitting said indication that group communication data has not been successfully decoded, and said step of transmitting said indication comprising transmitting said indication on said predetermined resource.

The user equipment is allocated uplink resources for transmissions to the network node and where it has indicated that it is configured to receive group communications, either by indicating that capability and/or by indicating an interest in one or more group communications, then additional uplink resource will be allocated to the user equipment, this additional resource comprises a predetermined resource for that UE transmitting an indication, a NACK, that data transmitted in a group communication has not been successfully received. In this way receiving an indication on that predetermined resource indicates to the network node that a UE has not successfully received the transmission and also identifies the UE concerned. In this way the network knows not only that a UE has not received the transmission successfully but which UE that is.

In some embodiment said allocation of uplink resources further comprises at least one of a resource for transmitting a feedback indication for unicast communications from said network node to said user equipment and a resource for transmitting an indication of a quality of signals received from said network node.

The resources allocated to the user equipment for transmitting the NACK for the group communication may be associated with those provided for unicast transmission feedback, in LTE the HARQ feedback signals. In this regard it recognises that each connected UE will have been allocated uplink resources for feedback for unicast transmissions and thus, it may be straightforward to provide some additional resource to allow a particular UE to inform a network node when it has not received a group communication. Associating the feedback in this way allows the additional resource required to transmit this information to be low, in many cases a single bit is sufficient as the further feedback information relating to the UE is already provided in the HARQ unicast feedback signal.

In some embodiments, said method further comprises storing said data that was not successfully decoded and receiving a further transmission of said data as a unicast transmission directed to said user equipment; and combining said received data with said stored data.

As the network node is aware of which user equipment has not received the transmission, it may retransmit this data as a unicast transmission directed to the user equipment. Where the user equipment is aware that the unicast transmission is a retransmission of this data then it can combine the received data with that stored and try again to decode the data. By receiving the retransmission of the data as a unicast transmission, the problem of retransmitting to a group where most of the UEs may have successfully received the previous data and an additional retransmission will be inappropriate is avoided.

In some embodiments said method comprises, receiving an allocation of a plurality of uplink resources for transmitting said indication that group communication data has not been successfully decoded, said further transmission of said data comprises an identifier identifying said uplink resource that said indication triggering said further transmission was received on.

In some cases the transmission of group data may be transmitted periodically such that an indication that data has not been successfully decoded is received before a subsequent packet is transmitted enabling the UE to know which data packet the retransmission corresponds to. Where this is not the case then in some embodiments different resources may be used to transmit the indications so that the resource used and the time it is received at can be used together by the network node to identify the data packet that the indication pertains to. The network node will then indicate this in the transmission to the UE receiving the retransmission, so the UE knows which data to combine.

In some embodiments, the method comprises receiving a plurality of group communications each identified by a different group identifier; wherein said further transmission of said data comprises an indicator indicating an identity of said group that said transmission triggering said further transmission was originally transmitted to and said step of combining comprising combining said stored data identified by said group identifier with said data received in said further transmission.

Where the user equipment is only receiving a single group communication, then any retransmission of group communication data must relate to that group and the user equipment can combine it with the stored data it has not been successful in decoding. However, in some cases the user equipment is able to receive a plurality of group communications and in such a case, the retransmission of the data may comprise an indicator which identifies the group that triggered this retransmission and in this way, the user equipment is able to combine the stored data from that group with the new transmission received. In this regard the network node will need to know which group communication the NACK from this user equipment pertained to, and in some embodiments the user equipment is allocated uplink resources for each of the plurality of group communications that it can receive or is receiving and in this way, the resource that the network node received the NACK indication on will indicate to it which group communication it pertains to. In this regard, the user equipment may be allocated these resources on connecting to the network and the allocation may correspond to all groups that the user equipment is able to receive transmissions from. Alternatively, the UE may indicate an interest in one or more groups and its allocation of resources will be updated each time it indicates a new interest. This latter has signalling overheads but does have the advantage of reducing the number of resources that are allocated at any one time.

In other embodiments, the method comprises transmitting an interest in a plurality of group communications to said network node; receiving an allocation of uplink resources, said uplink resources comprising a plurality of predetermined resources corresponding to said plurality of group communications, each of said plurality of predetermined resources being for transmission of an indication that data transmitted to said corresponding group has not been successfully decoded.

Alternatively, where a user equipment is able to receive a plurality of group communications, then it may only be allocated a single uplink resource for all of the group communications such that it can only indicate to the network node that it has not successfully received one of the group communications and it will not be able to identify which one. In such cases the network node will need to select one of the group communications for the retransmission or it may decide not to retransmit, but may utilise the channel quality information from the user equipment to adapt one or more of the links for transmitting group communications.

In some embodiments, the method comprises following transmission of said indication that said group communication data has not been successfully decoded, transmitting an indication of a quality of signals received from said network node at a subsequent available uplink resource allocated for transmission of channel quality resource information.

The user equipment will be allocated uplink resources for transmitting channel quality information and in some embodiments, the user equipment will transmit quality information on a subsequent available uplink resource allocated for this purpose once it has transmitted an indication that the group communication data has not been successfully decoded. In this regard, an indication that one or more of the user equipment are not successfully receiving the communications is an indication to the network node that perhaps it should adapt the link that it sends the group transmission on. In this regard setting the parameters for these links in response to channel quality information from all UEs in a group would be onerous in processing power for the network node. Furthermore, channel quality indicators from UEs in the centre of the cell that are receiving the signal without any problem are not very relevant when adapting the links. Thus, having determined the UE(s) that are having trouble receiving the signal, it is advantageous if channel quality information received from them is used to adapt the link. Thus, it may be advantageous if the user equipment transmits this information at the next available opportunity. It should be noted that the channel quality information that is transmitted may be legacy channel quality information based on channel reference signals or it can be specific to the group communications. In this regard, the group communication may be allocated within a certain subset of resources and channel reference signals transmitted on resources that are close to this subset may be those used to estimate channel quality where the channel quality estimated is to be specific for the group communications.

A second aspect of the present invention provides a user equipment comprising: a receiver operable to receive data transmitted by a network node, said data being transmitted to a plurality of user equipment identified by a group identifier; decoding circuitry operable to decode said received data; control logic operable to determine when said decoding logic is not able to decode said received data and to control a transmitter to transmit an indication that said data has not been successfully decoded.

In some embodiments, the control logic is operable to control said transmitter to transmit said indication on a predetermined resource.

In some embodiments said receiver is operable to receive an allocation of uplink resources for transmission of information to said network node, said uplink resources comprising said predetermined resource for transmitting an indication that group communication data has not been successfully decoded.

In some embodiments the user equipment further comprises a data store operable to store said data that was not successfully decoded; said receiver being operable to receive a further transmission of said data as a unicast transmission directed to said user equipment, said user equipment comprising combining logic operable to combine said received data with said stored data.

A third aspect of the present invention provides a method performed at a network node comprising: transmitting data to a plurality of user equipment identified by a group identifier; receiving an indication that at least some of said data has not been successfully decoded; and identifying said user equipment transmitting said indication.

A network node that transmits data to a group of user equipment identified by a group identifier and receives indications that some of the data may not have been successfully received may identify the user equipment transmitting this information from, for example, a resource that the indication is received on. This information allows the network node not only to know when a UE has not received a group communication but also which UE this is. The ability to identify the UE allows the network node, where appropriate, to direct retransmissions towards that user equipment and also to factor in channel quality information received from that UE when adapting the group communication link.

In some embodiments, the method comprises a further step of retransmitting said data that has not been successfully decoded to said identified user equipment as a unicast transmission.

The network node having identified the user equipment not receiving the data may transmit it to the user equipment as a unicast transmission. In this way, the retransmission on group bearers for a plurality of user equipment is reduced.

In some embodiments, the method comprises receiving a channel quality indication from said identified user equipment and amending at least one of a coding scheme and transmission power for transmitting data to said plurality of user equipment in response to said received channel quality indication.

The network node having identified the user equipment that did not successfully receive the data may amend the coding scheme such as a modulation coding scheme, and/or transmission power in response to the channel quality indication for that user equipment. In that regard, it may have previously received and stored channel quality indication for that user equipment and it may use this or it may await transmission of a subsequent channel quality indicator for that user equipment. In this regard, the user equipment may be configured to transmit an updated channel quality indication in response to having not successfully decoded the group communication data and in some embodiments this maybe specific for the group communication, in such a case the network node may preferentially wait to receive this value before adapting the link. In some embodiments, the method comprises receiving a plurality of indications from a plurality of user equipment that at least some of said data has not been successfully decoded; identifying each of said plurality of user equipment transmitting said indications from a plurality of resources that said indications are received on; receiving a channel quality indication from each of said plurality of identified user equipment and amending at least one of a coding scheme and transmission power for transmitting data to said plurality of user equipment in response to at least some of said received channel quality indications.

In some embodiments, more than one user equipment may not receive the group communication successfully and the network node will receive indications from each of the user equipment that have not successfully received the data and it will identify each of them from the resource this NACK is received on. It may then use one or more of the channel quality indications received from these user equipment to adapt the link by adjusting the coding scheme and/or the transmission power. In this regard, the channel quality indications may have been previously received and stored at the network node or the network node may receive them subsequently and use these newly updated channel quality indications in its amending step.

In some embodiments, the method further comprises allocating to each of said plurality of user equipment identified by said group identifier, uplink resources comprising a predetermined resource for each of said user equipment for transmitting an indication that group communication data has not been successfully decoded.

Allocating a different predetermined resource for each user equipment to transmit the indication on allows the network to identify the user equipment transmitting such an indication from the resource that it is received on. In this regard the allocation of resource for this indication may be associated with resource allocated to a user equipment to transmit feedback HARQ responses on for unicast transmissions.

In some embodiments, the method comprises transmitting a data packet to said plurality of user equipment and not transmitting a further data packet until after a predetermined time period has expired, said predetermined time period being a time period during which said indication is transmitted by said user equipment.

In some cases, only one feedback process is envisaged for the point to multi-point transmissions and in such a case, the network will only transmit one data packet for each group within a feedback round trip time. The network node will wait for the feedback or for the resource where feedback would occur before transmitting the next packet for this group. In other embodiments, more than one feedback process is used and in such a case the process is identified in the retransmission such that it can be linked with a reception time of the initial transmission.

In some embodiments, the method comprises receiving from at least one user equipment an indication that said user equipment is interested in receiving a plurality of group communications, transmitting a corresponding plurality of group identifiers to said user equipment and allocating a plurality of predetermined resources corresponding to said plurality of predetermined resources, each being for transmitting an indication that a data packet for said group communication has not been successfully decoded.

The network node may allocate resources for each group communication that a user equipment has expressed an interest in. In such a case, it will determine from the resource that the indication is received on which group communication data has not been successfully received and when retransmitting data it can include an identifier identifying that group so that the user equipment is aware of which group the retransmission pertains to.

Alternatively, the method comprises receiving from at least one user equipment an indication that said user equipment is interested in receiving a plurality of group communications, transmitting a corresponding plurality of group identifiers to said user equipment and allocating a predetermined resource for transmitting an indication that a data packet for one of said group communications has not been successfully decoded, and in response to receiving said indication, retransmitting a data packet from one of said group communications.

In other embodiments only a single uplink resource is allocated to indicate that a group communication has not been successful even where the user equipment may be involved in a plurality of group communications. In such a case, on receipt of an indication that the user equipment has not received data for a group communication successfully, the network node will select which of the group communications it is going to retransmit a data packet to the user equipment from. In this way, the incorrect data packet may be transmitted but the amount of resources allocated to the user equipment is reduced. It may be that certain group communications are more important than others and in such a case, such an embodiment may function well.

A fourth aspect of the present invention provides a network node comprising: a transmitter operable to transmit data to a plurality of user equipment identified by a group identifier; a receiver operable to receive an indication that at least some of said data has not been successfully decoded; and identifying logic operable to identify said user equipment transmitting said indication.

In some embodiments, the transmitter is operable to of retransmit said data that has not been successfully decoded to said identified user equipment as a unicast transmission.

In some embodiments, the receiver is operable to receive a channel quality indication from said identified user equipment and the network node further comprises control circuitry operable to amend at least one of a coding scheme and transmission power for transmitting data to said plurality of user equipment in response to said received channel quality indication.

A fifth aspect of the present invention provides a computer program which when executed by a computer is operable to control said computer to perform steps in a method according to one of a first aspect or a third aspect of the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates general procedures for group scheduling;
Figure 2 illustrates HARQ transmissions in a single cell for PTM transmissions;
Figure 3 illustrates transmissions between a user equipment and network node during group transmissions according to an embodiment; and
Figure 4 shows user equipment within a cell of a network node.

### DESCRIPTION OF THE EMBODIMENTS

Before discussing the embodiments in any more detail, first an overview will be provided.

Unlike unicast transmissions, a single cell PTM (point to multiple) is intended for a group of UEs. Hence it may be advantageous if the service reception and channel quality of a group of UEs is considered in the radio resource scheduling. Unicast uses channel quality indicator (CQI) measured and reported by the UE in scheduling decision. Enabling CSI (channel service indicator) transmission for all the UEs within a group is cumbersome and requires a large amount of UL (uplink) resources. If the CQI is available at the network, this can be used in determining the appropriate Modulation Coding Scheme and the channel protection required for the single cell PTM transmission.

It would be desirable to make CQI use and reporting suitable for single cell PTM transmission.

Embodiments enable CQI reporting by the UE to be used for selection of channel coding for single cell PTM transmission. Only the reporting by RRC_Connected UEs is considered.

UEs which are capable of receiving single cell PTM are configured with a new format allowing feedback associated with existing feedback techniques such as HARQ feedback. In some embodiments an additional HARQ feedback field is configured for RRC_Connected UEs for transmission of the feedback corresponding to the single cell PTM reception. The HARQ feedback corresponding to the single cell PTM is transmitted on PUCCH (physical uplink control channel) assigned for the UE's C-RNTI together with unicast HARQ ACK/ NACK feedback.

In some embodiments the UE only provides the single cell PTM related HARQ feedback for the unsuccessful reception, hence only HARQ NACKis provided. Even though the UE may receive multiple single cell PTM services, only one field may be used for the HARQ feedback and in such a case it is related to any of the single cell PTM service i.e. there is shared HARQ NACK feedback for multiple single cell PTM services.

Which single cell PTM services are interested or received by the UE, is communicated to the network using explicit UL control signalling. Therefore, the network is aware of which services the HARQ feedback is related to upon reception of the HARQ NACK feedback from the UE.

Upon transmission of HARQ NACK feedback for a PTM service, the UE may report CQI in the next allocated periodic CSI occurrence.

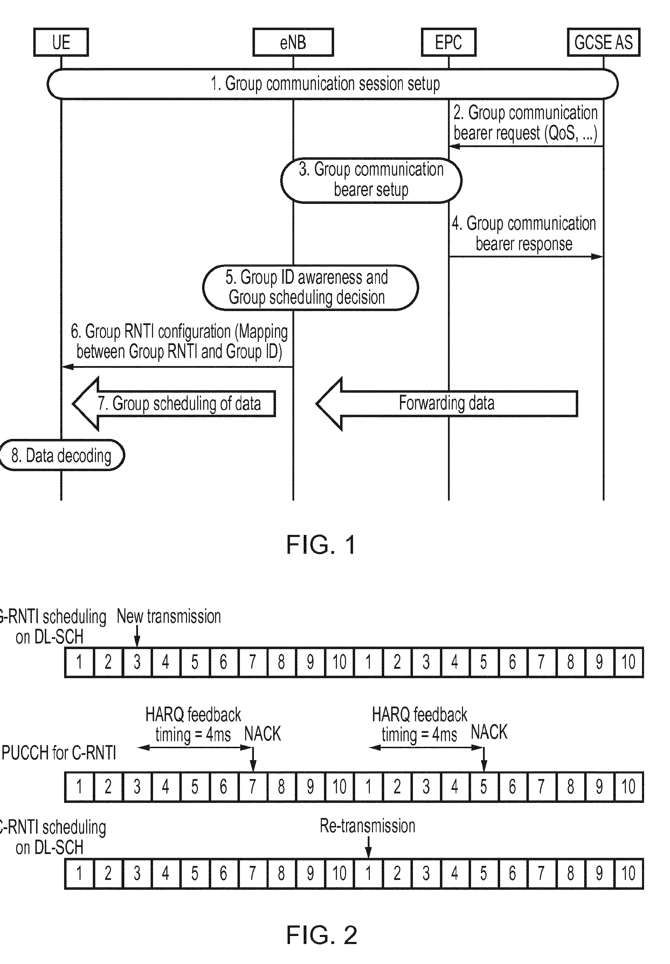

The network may take the CQI reporting by the UEs which did not receive a PTM service successfully when determining the MCS (modulation coding scheme) and channel protection for the corresponding single cell PTM services.
An explanation of group communication is given with respect to Figure 1. With this group scheduling scheme, all the users within a cell that are interested in participating in the same GCSE (group communication system enablers) group will be assigned with a common Group RNTI (radio network temporary identifier). These users will then be scheduled by the network node in this case the eNB with this Group RNTI, thus the group communication data is delivered via shared radio resources to multiple group members.

Figure 1 shows the general procedures for group scheduling, including the high-level interactions between different entities that involve the group communication.

**Step 1:** UE initiates a group communication setup for a particular GCSE group using application level signalling. GCSE AS (application signalling) performs the authorization.

**Step 2-4:** As per the request from the GCSE AS, EPC (evolved packet core) and eNB setup the bearer in downlink for the group communication. If there are multiple users interested in the same GCSE group, a common bearer might be used.

**Step 5:** eNB acquires the information regarding which GCSE group(s) each UE is interested in participating in. eNB may get such information either from EPC or from UE report. For a particular GCSE group, depending on the number of interested UEs, eNB decides which scheduling scheme to use, i.e. PtP (point to point) or PtM (group scheduling).

**Step 6 :** If eNB decides to use group scheduling for a particular GCSE group, eNB configures the Group RNTI as well as the mapping between the Group RNTI (G-RNTI) and the corresponding GCSE group identifier to the group members. The configuration could be achieved by either dedicated RRC signalling or shared RRC signalling (SIB or Paging).

**Step 7:** eNB performs group scheduling for the GCSE group. The PDCCH for downlink radio resource assignment is scrambled by the corresponding Group RNTI.

**Step 8 :** UE decodes the group communication data. Support of HARQ feedback may allow for the decoded data (indication of successful or unsuccessful decoding).

As per step 5, the eNB can be made aware of which groups the UE is interested in receiving these single cell PTM communications for. RRC_Connected UE is configured with resources for periodic CQI reporting in the legacy system.

Therefore, the eNB have access to CQI reporting from all the UEs within a group, and this information may be taken into account in resource selection for single cell PTM. However, use of CQI from all UEs within a group in resource selection is cumbersome unnecessary and increases the eNB's processing load. Note that the number of UEs in a group may be in the range of few thousands UEs and also the number groups in a cell could be in the range of thousands according to public safety application requirement. The single cell PTM is focused on public safety applications.

In this regard CQI reporting from all of the UEs in a group is not necessary for the determination of appropriate MCS. For example the UEs in the cell centre may have high CQI. If the transmission is targeted for the UEs at the cell edge, the UEs at the cell centre will receive the service successfully. Therefore in the invention, only the CQI reporting from the UEs who didn't receive the service successfully is taken into account in MCS decision for the single cell PTM.

Note also that, the service reception by a RRC_Idle UE is not taken into account in embodiments, it is rather considered that RRC_Connected UEs in the cell may be distributed within the cell and may represent the service quality received by most of the UEs in the cell including RRC_Idle UEs.

HARQ feedback is sent on PUCCH resources for unicast downlink transmission in a legacy system. PUCCH provides resources for the RRC_Connected UE. In order to reduce the resources needed for transmission of control signals, the PUCCH in LTE is designed to exploit frequency diversity. Where one subframe comprises a single (0.5ms) radio block at or near one edge of the system bandwidth, the other half of the (0.5ms) subframe is located the opposite end of the system bandwidth. A number of UEs are multiplexed on the PUCCH using code division multiplexing (CDM). Each CDM code represents a UE identified by a C-RNTI in the cell.

Multiple PUCCH formats are defined in the legacy system for transmission of HARQ ACK/ NACK, scheduling request (SR) and CQI. PUCCH format 3 is designed to carry multiple HARQ ACK/ NACK for carrier aggregation and SR.

According to an embodiment, a new PUCCH format is proposed to transmit multiple HARQ ACK/NACKfor carrier aggregation plus HARQ NACK for single cell PTM transmission. In another embodiment, PUCCH format is designed to carry the SR and CQI together with HARQ NACK for single cell PTM.

When using single cell PTM, the group is identified in the cell using G-RNTI which represents a group of UEs in the cell.

The PUCCH configuration for HARQ feedback for the UE's C-RNTI is provided to the UE using dedicated RRC signalling. When the UE is interested in or is receiving single cell PTM services, the UE is configured with PUCCH to convey not only the HARQ feedback for the unicast but also for the single cell PTM.

The UEs within the group decode the data delivered for their G-RNTI. If the decoding is not successful, the UE transmit a HARQ NACKon the corresponding PUCCH channel configured for the UE. Note that the time between the reception of the data block for single cell PTM and the HARQ feedback can be kept the same as for unicast, where a 4ms fixed time is used in the legacy LTE system.

Upon the reception of the HARQ NACK for single cell PTM, the eNB is aware of which UE didn't receive the data successfully. Therefore, the network monitors the CQI reporting from the UE and takes the UE's CQI when determining or modifying the MSC of the single cell PTM transmission.

The UE is configured with periodic CQI configuration for the CQI transmission. After an unsuccessful decoding of the single cell PTM, the UE reports a CQI at the next periodic CQI occasion as configured. CQI is measured based on the downlink received signal quality, typically based on the measurements of the downlink reference signal in legacy LTE system. The same measurement can be used for CQI intended for single cell PTM.

In another embodiment, the CQI measurement is modified to derive a value based on PTM specific reference signals. When the CQI is derived based on the PTM specific signals, the UE transmits the measured CQI using the configured CQI occupation or resource. In case, legacy CQI and PTM specific CQI are available for transmission, and the UE has transmitted a HARQ NACK for single cell PTM reception, the CQI measurement for PTM is transmitted in the next available CQI occurrence, i.e. CQI measured PTM in this situation take priority over the legacy CQI measurements.

Upon reception of HARQ NACK for single cell PTM, the eNB is aware of which UE is unsuccessful at receiving PTM. The network is also aware of which PTM service or services the UE is interested in. Thus the network re-transmits the data transmitted on PTM to the UE using UE C-RNTI. In other words, the initial transmission of single cell PTM services are transmitted using G-RNTI intended for a group of UEs, while retransmission of the packet is transmitted using C-RNTI and intended only for a particular UE identified by the C-RNTI.

Legacy system allows for up to 8 HARQ processes per UE. To enable re-transmission of single cell PTM on unicast, either a HARQ process needs to be dedicated for the use of single cell PTM retransmission or new HARQ process identity should be introduced to identify single cell PTM retransmission at the UE.

Figure 2 illustrates the HARQ procedure and how the CQI reporting from the UE is used for single cell PTM and communication between the UE and the eNB.

Initial transmission of single cell PTM service is sent on DL-SCH (downlink shared channel) using associated G-RNTI as identification. The UE which does not successfully receive the data packet, provides a HARQ NACK on PUCCH resources as configured to the UE. The network identifies the UE and the unsuccessful reception of single cell PTM by the UE. The network retransmits the packet on DL-SCH using the UE's C-RNTI and single cell PTM HARQ process as identification of the retransmission.

The UE combines the retransmission packet with the buffered data for the HARQ process, if the decoding is unsuccessful for the second time , the UE transmits HARQ NACKon the PUCCH resources configured to theUE for single cell PTM HARQ feedback.

The UE can only receive one packet on DL-SCH identified by the C-RNTI in a given subframe. Therefore, ifunicast transmission is also required in the same subframe as the re-transmission of single cell PTM packet, the network takes delay of one the packets to the next subframes and avoids the transmission collision.

If the UE receives an initial new transmission identified by G-RNTI and a re-transmission of the single cell PTM in the same subframe, the UE may take the new transmission.

A simplification is taken in the above method to allow for only one HARQ process for single cell PTM. This means the network can only transmit one data packet per G-RNTI within a HARQ Round trip time. The eNB needs to wait for the HARQ feedback before transmitting the next packet for the G-RNTIs. If more than one HARQ process is to be used for single cell PTM, the corresponding HARQ process id needs to be signalled in the retransmission. HARQ process identity can be linked with the reception time of the initial transmission.

Additionally, a UE may belong to multiple Groups hence monitoring multiple G-RNTIs. Even with HARQ process simplification proposed above, there may be hundreds of active groups in a cell. Shared HARQ NACK by multiple G-RNTIs is proposed as a simplification. If more than one G-RNTIs are received by the UE in the same subframe, the UEs will provide the HARQ NACK (if any PTM packets not received successfully). The network may take a decision to retransmit all of the G-RNTIs or drop all re-transmission, or only re-transmit selected G-RNTIs. All the re-transmission decision is left to the network implementation.

The network may also retransmit the unsuccessful single cell PTM packet to the UE over DL-SCH using C-RNTI as identification. Ie: while the initial transmission is addressed to G-RNTI, the retransmission is addressed to the UE C-RNTI.

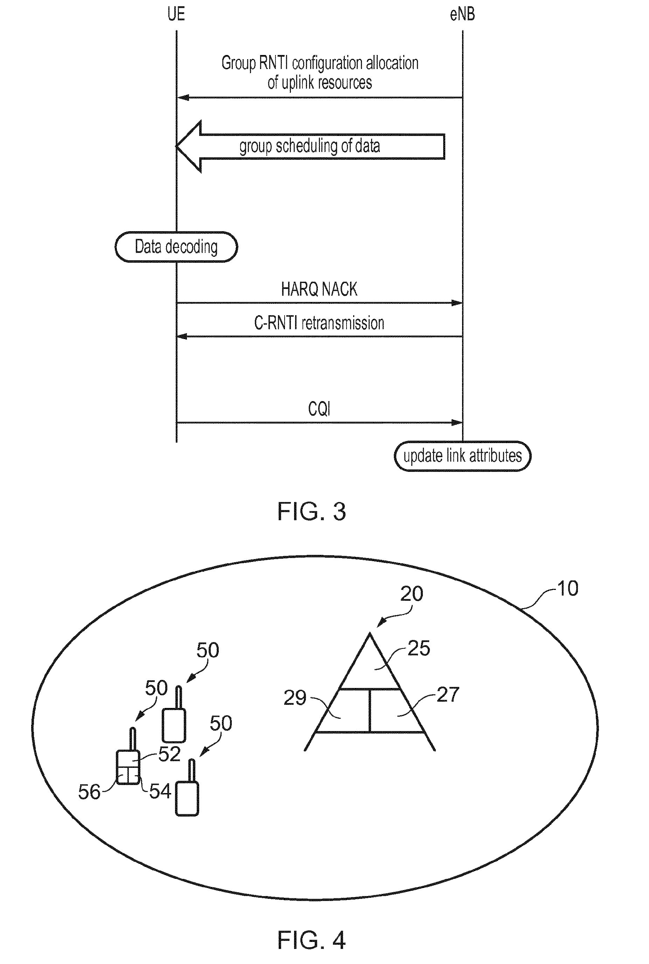

Figure 3 shows a procedure for group scheduling according to an embodiment of the present invention. It concerns the signals transmitted between the network node and the UE and concerns the steps in group scheduling from step 6 onwards as shown in Figure 1. The group identifier G-RNTI configuration and allocation of uplink resources is transmitted to the user equipment from the network node. These uplink resources include a predetermined resource to be used for transmitting a NACK feedback response when a data packet from a group communication cannot be successfully decoded.

Once these resources have been allocated data is then transmitted to the group of user equipment identified by the G-RNTI. The user equipment receiving these transmissions will decode the data and where a user equipment cannot successfully decode a data packet it will transmit a NACK to the network node in the resource allocated to it for this transmission. This resource is associated with the HARQ feedback resources allocated to that UE for its unicast transmissions and thus, the network node receiving the NACK transmission associated with the HARQ transmission will be able to identify the user equipment that has not been successful in decoding the data packet of the group communication transmitted to it. The network node can therefore retransmit this data packet as a unicast transmission using the C-RNTI (cell radio network temporary identifier) for this user equipment. The user equipment receiving this data will combine it with the stored data packet from the group transmission and will again try to decode it. It will also transmit a channel quality indicator at the next available uplink resource for this transmission and this can be used by the network node to update link attributes for the group transmissions. As this CQI is from a user equipment that has been unsuccessful in receiving the group information it is particularly relevant to any updating of attributes. In this regard, where a plurality of user equipment are receiving a group communication, then assessing channel quality indicators from each would be an onerous task. Identifying user equipment that are not successfully receiving data and using their channel quality indicator(s) is a far more efficient way of adapting the link than using CQIs from all user equipment within the group.

Figure 4 shows schematically a plurality of user equipment 50 within a single cell 10 each being within a group receiving transmission from the network node 20. The network node 20 comprises a transmitter and receiver 25, identifying logic 27 for identifying a UE that transmitted a received NACK from the resource it is received on, and control logic 29. In this embodiment the user equipment 50 are grouped close to each other. Each user equipment 50 comprises a transmitter and receiver 52, decoding and control logic 54 and a data store 56 for storing data that it has received but cannot currently decode. In this case the user equipment are located geographically close to each other as they are members of a group communication used for public safety providers, and in this case they have responded to an emergency and are all located geographically close to the incident. In such a case, adaptation of the channel quality so that one of the user equipment not currently receiving data successfully will be able to do so, is an efficient procedure because as the user equipment are all located close to each other, adapting the link for one, will probably be suitable for the others too. In other embodiments the UEs may be spread throughout the cell, however, adapting the link using CQIs from only those UEs that are not successfully receiving the data is in itself an efficient way of updating the link.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method performed at a user equipment comprising:
receiving data transmitted by a network node, said data being transmitted to a plurality of user equipment identified by a group identifier; and
in response to not being able to decode at least some of said received data, transmitting an indication that said at least some of said data has not been successfully decoded.

2. A method according to claim 1, comprising initial steps of:
transmitting an indication to said network node that said user equipment is configured to receive group communications; and
receiving an allocation of uplink resources, said uplink resources comprising a predetermined resource for transmitting an indication that group communication data has not been successfully decoded, and said step of transmitting said indication comprising transmitting said indication on said predetermined resource.

3. A method according to any preceding claim, said method further comprising:
storing said data that was not successfully decoded ;
receiving a further transmission of said data as a unicast transmission directed to said user equipment; and
combining said received data with said stored data.

4. A method according to claim 3, comprising:
receiving a plurality of group communications each identified by a different group identifier; wherein
said further transmission of said data comprises an indicator indicating an identity of said group that said transmission triggering said further transmission was originally transmitted to and said step of combining comprising combining said stored data identified by said group identifier with said data received in said further transmission.

5. A method according to any preceding claim, comprising:
transmitting an interest in a plurality of group communications to said network node;
receiving an allocation of uplink resources, said uplink resources comprising a plurality of predetermined resources corresponding to said plurality of group communications, each of said plurality of predetermined resources being for transmission of an indication that data transmitted to said corresponding group has not been successfully decoded.

6. A method according to any preceding claim, comprising following transmission of said indication that said group communication data has not been successfully decoded, transmitting an indication of a quality of signals received from said network node at a subsequent available uplink resource allocated for transmission of channel quality resource information.

7. A user equipment comprising:
a receiver operable to receive data transmitted by a network node, said data being transmitted to a plurality of user equipment identified by a group identifier;
decoding logic operable to decode said received data;
control logic operable to determine when said decoding circuitry is not able to decode said received data and to control a transmitter to transmit an indication that said data has not been successfully decoded.

8. A method performed at a network node comprising:
transmitting data to a plurality of user equipment identified by a group identifier;
receiving an indication that at least some of said data has not been successfully decoded; and
identifying said user equipment transmitting said indication.

9. A method according to claim 8, comprising a further step of retransmitting said data that has not been successfully decoded to said identified user equipment as a unicast transmission.

10. A method according to claim 8 or 9, comprising receiving a channel quality indication from said identified user equipment and amending at least one of a coding scheme and transmission power for transmitting data to said plurality of user equipment in response to said received channel quality indication.

11. A method according to claim 8 or 9,comprising receiving a plurality of indications from a plurality of user equipment that at least some of said data has not been successfully decoded;
identifying said plurality of user equipment transmitting said indications from a plurality of resources that said indications are received on.
receiving a channel quality indication from each of said plurality of identified user equipment and amending at least one of a coding scheme and transmission power for transmitting data to said plurality of user equipment in response to at least some of said received channel quality indications.

12. A method according to any one of claims 8 to 11, further comprising allocating to each of said plurality of user equipment identified by said group identifier uplink resources comprising a predetermined resource for each user equipment for transmitting an indication that group communication data has not been successfully decoded.

13. A method according to any one of claims 8 to 12, comprising transmitting a data packet to said plurality of user equipment and not transmitting a further data packet until after a predetermined time period has expired, said predetermined time period being a time period during which said indication is transmitted.

14. A network node comprising:
a transmitter operable to transmit data to a plurality of user equipment identified by a group identifier;
a receiver operable to receive an indication that at least some of said data has not been successfully decoded; and
identifying logic operable to identify said user equipment transmitting said indication.

15. A computer program which when executed by a computer is operable to control said computer to perform steps in a method according to any one of claims 1 to 7 and 9 to 13.

## Amended claims

### Amended claims in accordance with Rule 137(2) EPC.

1. A method performed at a user equipment comprising the initial steps of:
transmitting an indication to a network node that said user equipment is configured to receive group communications;
receiving an allocation of uplink resource for transmitting an indication that group communication data has not been successfully decoded, said uplink resource comprising a predetermined resource associated with a resource provided for unicast transmission feedback; and then
receiving data transmitted by said network node, said data being transmitted to a plurality of user equipment identified by a group identifier; and
in response to not being able to decode at least some of said received data, transmitting on said predetermined resource an indication that said at least some of said data has not been successfully decoded.

2. A method according to any preceding claim, said method further comprising:
storing said data that was not successfully decoded ;
receiving a further transmission of said data as a unicast transmission directed to said user equipment; and
combining said received data with said stored data.

3. A method according to claim 2, comprising:
receiving a plurality of group communications each identified by a different group identifier; wherein
said further transmission of said data comprises an indicator indicating an identity of said group that said transmission triggering said further transmission was originally transmitted to and said step of combining comprising combining said stored data identified by said group identifier with said data received in said further transmission.

4. A method according to any preceding claim, comprising:
transmitting an interest in a plurality of group communications to said network node;
receiving an allocation of uplink resources, said uplink resources comprising a plurality of predetermined resources corresponding to said plurality of group communications, each of said plurality of predetermined resources being for transmission of an indication that data transmitted to said corresponding group has not been successfully decoded.

5. A method according to any preceding claim, comprising following transmission of said indication that said group communication data has not been successfully decoded, transmitting an indication of a quality of signals received from said network node at a subsequent available uplink resource allocated for transmission of channel quality resource information.

6. A user equipment (5) comprising:
a transmitter (52) operable to transmit an indication to a network node that said user equipment is configured to receive group communications;
a receiver (52) operable to receive an allocation of uplink resource for transmitting an indication that group communication data has not been successfully decoded, said uplink resource comprising a predetermined resource associated with a resource provided for unicast transmission feedback and to receive data transmitted by a network node, said data being transmitted to a plurality of user equipment identified by a group identifier;
decoding logic (54) operable to decode said received data;
control logic (54) operable to determine when said decoding circuitry is not able to decode said received data and to control said transmitter to transmit said indication that said data has not been successfully decoded on said predetermined resource.

7. A method performed at a network node comprising:
receiving from a user equipment an indication that said user equipment is configured to receive group communications;
transmitting to said user equipment an allocation of uplink resource for transmitting an indication that group communication data has not been successfully decoded, said uplink resource comprising a predetermined resource associated with a resource provided for unicast transmission feedback
transmitting data to a plurality of user equipment identified by a group identifier;
receiving an indication that at least some of said data has not been successfully decoded on said predetermined resource; and
identifying said user equipment transmitting said indication from said predetermined resource.

8. A method according to claim 7, comprising a further step of retransmitting said data that has not been successfully decoded to said identified user equipment as a unicast transmission.

9. A method according to claim 7 or 8, comprising receiving a channel quality indication from said identified user equipment and amending at least one of a coding scheme and transmission power for transmitting data to said plurality of user equipment in response to said received channel quality indication.

10. A method according to claim 7 or 8,comprising receiving a plurality of indications from a plurality of user equipment that at least some of said data has not been successfully decoded;
identifying said plurality of user equipment transmitting said indications from a plurality of resources that said indications are received on.
receiving a channel quality indication from each of said plurality of identified user equipment and amending at least one of a coding scheme and transmission power for transmitting data to said plurality of user equipment in response to at least some of said received channel quality indications.

11. A method according to any one of claims 7 to 10, comprising transmitting a data packet to said plurality of user equipment and not transmitting a further data packet until after a predetermined time period has expired, said predetermined time period being a time period during which said indication is transmitted.

12. A network node (20) comprising:
a receiver (25) operable to receive from a plurality of user equipment an indication that said user equipment is configured to receive group communications;
a transmitter (25) operable to transmit to each of said plurality of user equipment an allocation of uplink resource for transmitting an indication that group communication data has not been successfully decoded, said uplink resource comprising a predetermined resource associated with a resource provided for unicast transmission feedback; wherein
said transmitter is further operable to transmit data to said plurality of user equipment identified by a group identifier;
said receiver is further operable to receive an indication that at least some of said data has not been successfully decoded on said predetermined resource; and
identifying logic (27) operable to identify said user equipment transmitting said indication from said predetermined resource.

13. A computer program which when executed by a computer is operable to control said computer to perform steps in a method according to any one of claims 1 to 5 and 7 to 11.
